# EUROPEAN PATENT APPLICATION

(11) **EP 4 838 422 A1**
(43) Date of publication of application: **11.11.2026**
(21) Application number: 25174672.3
(22) Date of filing: 07.05.2025
(51) Int. Cl.: G06N 5/022, G06Q 30/018

(54) **CONTROLLABLE ONTOLOGY-DRIVEN GENERATIVE NEURAL COMPLIANCE AUGMENTATION (COGNICA)**

(71) Applicant: Graf, Torsten, 68723 Schwetzingen (DE)
(72) Inventor: Graf, Torsten, 68723 Schwetzingen (DE)

(57) **Abstract**

**Technical Field:**

The invention relates to computer-implemented artificial intelligence (AI) systems configured for deterministic compliance enforcement, proactive human oversight, ontology-driven semantic contextualization, symbolic rule verification, and blockchain-based audit logging in regulated industry applications.

**Background Art:**

Current AI systems (e.g., Large Language Models-LLMs) lack deterministic compliance at token generation level, leading to operational and regulatory risks. Additionally, existing systems lack real-time compliance verification, structured proactive human oversight, and robust auditability.

**Technical Problem Addressed:**

The technical challenges addressed by the invention include non-deterministic regulatory compliance, insufficient real-time compliance verification, lack of proactive compliance controls, inadequate transparency, and suboptimal computational efficiency in regulatory-compliant generative AI workflows.

**Summary of the Invention (Technical Solution and Effects):**

The invention provides an integrated technical system ("COGNICA") comprising ontology-driven semantic knowledge retrieval, deterministic finite automata (DFA)-based compliance enforcement at token level, symbolic rule-based compliance verification, proactive anomaly detection, proactive human-before-the-loop oversight, immutable blockchain-based audit logging, and cryptographically secure forced data forgetting.

**Technical effects include:**
• Deterministic compliance ensured at token-level through DFA compliance enforcement.
• Real-time ontology-driven semantic context reducing computational overhead and enhancing regulatory accuracy.
• Deterministic symbolic verification ensuring precise compliance in real-time.
• Proactive anomaly detection and structured human oversight enabling deterministic human compliance intervention.
• Blockchain-based immutable auditability providing complete transparency and regulatory compliance verification.
• Cryptographic secure data deletion meeting regulatory data-retention mandates (e.g., GDPR).

**Brief Description of Figures (Provided):**

**Figure 1 (High-Level Technical Architecture):**
Figure 1 illustrates the overall integrated architecture comprising modules for input validation, contextual regulatory verification, real-time ontology-driven semantic retrieval, deterministic DFA-compliant generative AI, symbolic compliance verification, proactive AI anomaly detection, proactive human-before-the-loop oversight, blockchain-based immutable audit logging, and secure forced data forgetting. It highlights deterministic compliance enforcement, adaptive real-time compliance updates, and structured proactive oversight.
**Figure 2 (Detailed Operational Workflow):**
Figure 2 provides a detailed operational workflow demonstrating the precise technical interactions and data-flow pathways between the COGNICA modules. It illustrates deterministic compliance verification at each workflow step, proactive anomaly detection, deterministic escalation to proactive human oversight, bidirectional adaptive data updates, and immutable audit logging, ensuring deterministic regulatory compliance, operational transparency, and compliance traceability.

**Summary of Claims:**

**Independent Claim (Method):**

A computer-implemented method comprising user input receipt, ontology-driven contextual knowledge retrieval, deterministic DFA compliance enforcement at token generation level, real-time deterministic symbolic rule verification, proactive anomaly detection, structured proactive human oversight, immutable blockchain audit logging, and cryptographic secure data deletion for regulatory compliance.

**Dependent Claims Detailing:**

• configurable user-controlled parameters influencing compliance constraints.
• adaptive real-time ontology-driven contextual semantic retrieval.
• Deterministic DFA compliance enforced via generalized hardware acceleration.
• Real-time symbolic compliance verification via symbolic reasoning engines (e.g., Datalog).
• proactive anomaly detection configured for real-time compliance monitoring.
• structured proactive human-before-the-loop oversight.
• Immutable blockchain logging providing regulatory auditability.
• secure forced data forgetting aligned with regulatory retention requirements (e.g., GDPR Article 17).

**Industrial Applicability (EPC Art. 57):**

The technical solutions and innovative features of the COGNICA invention provide deterministic compliance and proactive human oversight, making it suitable for high-value regulated industry sectors. applicable industries include:
• **Healthcare:**
Automated and compliant generation of patient interaction and medical documentation adhering to GDPR, HIPAA, and medical ethics regulations.
• **Financial Sector:**
Automated financial risk assessment compliant with MiFID II, Dodd-Frank Act, and Basel III financial regulatory frameworks.
• **Engineering Sector:**
Fully automated generation of engineering documentation and digital twin outputs aligned with ISO, IEC, and industry-specific engineering compliance standards.
• **Defense Sector:**
Automated compliance enforcement in sensitive defense decision-making ensuring adherence to ITAR, EAR, NATO, and similar defense-specific regulations.

Thus, COGNICA ensures deterministic regulatory compliance, operational transparency, proactive human oversight, and compliance verification within regulated industry workflows.

**Reference to COGNICA Technical Specification Document (Applicant-provided):**

This summary incorporates detailed technical insights and operational workflows provided in the applicant's original document titled **"COGNICA Technical Specification".** The referenced document outlines comprehensive system modules, detailed compliance workflows, deterministic compliance enforcement, ontology-driven semantic integration, proactive anomaly detection, structured human oversight, symbolic compliance verification, blockchain-based audit logging, and cryptographic secure forced data deletion aligned with regulatory data-retention requirements.

The detailed features described in the **"COGNICA Technical Specification"** document form the substantive technical basis for this invention summary, the patent claims, and provided figures.

## Description

### Section 1: Introduction and Technical Field

The present invention relates specifically to computer-implemented methods and systems integrating advanced artificial intelligence (AI) with deterministic compliance mechanisms, proactive human oversight, symbolic compliance verification, ontology-driven semantic contextualization, proactive anomaly detection, and blockchain-based audit logging, tailored for operational deployment in regulated industries requiring strict compliance adherence and transparency.

The invention specifically addresses the challenges posed by AI systems, such as generative language models, that traditionally operate without sufficient deterministic compliance frameworks or integrated oversight mechanisms, resulting in compliance vulnerabilities, operational uncertainties, and regulatory non-adherence. The invention solves these technical problems by creating a unified, deterministically compliant AI architecture suitable for complex regulatory frameworks including, but not limited to GDPR, HIPAA, EU AI Act, ITAR, and financial sector regulations.

### Section 2: Extended Background Art and Context

Recent advances in generative neural models have substantially increased their deployment in regulated domains. However, existing solutions present significant limitations due to insufficient deterministic token-level compliance enforcement, lack of real-time compliance verification, suboptimal integration with proactive human oversight, computational inefficiencies, and inadequate transparency through audit mechanisms.

Conventional solutions largely focus on reactive compliance checks conducted after AI output generation. Moreover, traditional human-in-the-loop methodologies are supervisory rather than proactive, limiting their effectiveness. Consequently, there's a technical need for deterministic, real-time compliance enforcement integrated seamlessly with ontology-driven contextualization and technical human oversight to significantly enhance computational efficiency, compliance determinism, and operational transparency.

### Section 3: Detailed Technical Problem

The technical problems addressed by COGNICA include:
- Lack of deterministic compliance enforcement at token generation, creating operational risks and regulatory non-adherence.
- Computational inefficiencies arising from reactive compliance methods and inadequate contextual semantic retrieval, negatively impacting performance and latency.
- Insufficient proactive human oversight integration limiting timely compliance interventions and risk mitigations.
- Inadequate transparency and auditability hindering compliance verification processes.

### Section 4: Comprehensive Summary of the Invention

The invention introduces the "Controllable Ontology-driven Generative Neural Intelligent Compliance Architecture" (COGNICA), a novel integrated compliance solution combining generative neural AI with ontology-driven semantic reasoning, deterministic compliance mechanisms using deterministic finite automata (DFA), symbolic rule-based reasoning, proactive human oversight, immutable blockchain-based logging, and proactive anomaly detection into a unified technical architecture.
core technical features include:
- **Real-time Ontology-driven Semantic Contextualization:**
   improves compliance accuracy by dynamically retrieving and integrating semantic context based on trust scoring, enhancing operational precision and significantly reducing computational overhead.
- **Deterministic DFA-Based Compliance Masking:**
   Ensures token-level deterministic compliance through parallelized hardware accelerators (generalized GPU/TPU/FPGA architectures), significantly reducing latency (≤1 µs/token) and operational uncertainty.
- **Symbolic Rule-Based Compliance Verification:**
   employs deterministic symbolic reasoning (e.g., Datalog), integrating with generative models to guarantee precise real-time compliance verification at microsecond granularity.
- **Blockchain-Based Immutable Audit Logging:**
   cryptographic blockchain logging ensures immutable and transparent records of compliance decisions, human oversight interventions, and operational interactions enhancing regulatory auditability.
- **Proactive Human-Before-the-Loop Oversight:**
   integrates proactive human oversight as a deterministic technical compliance control mechanism, escalating ambiguous or critical outputs immediately for technical review and verification.
- **Cryptographically Secure Forced Forgetting Module:**
   ensures compliance-aligned secure data deletion processes using advanced cryptographic methods, aligning with stringent regulatory data-retention requirements.
- **Proactive Al-based Anomaly Detection and Risk Mitigation:**
   enhances operational robustness by employing real-time AI-driven predictive analytics to proactively detect and escalate compliance anomalies for immediate human oversight.

### Section 5: Brief Description of Detailed Drawings

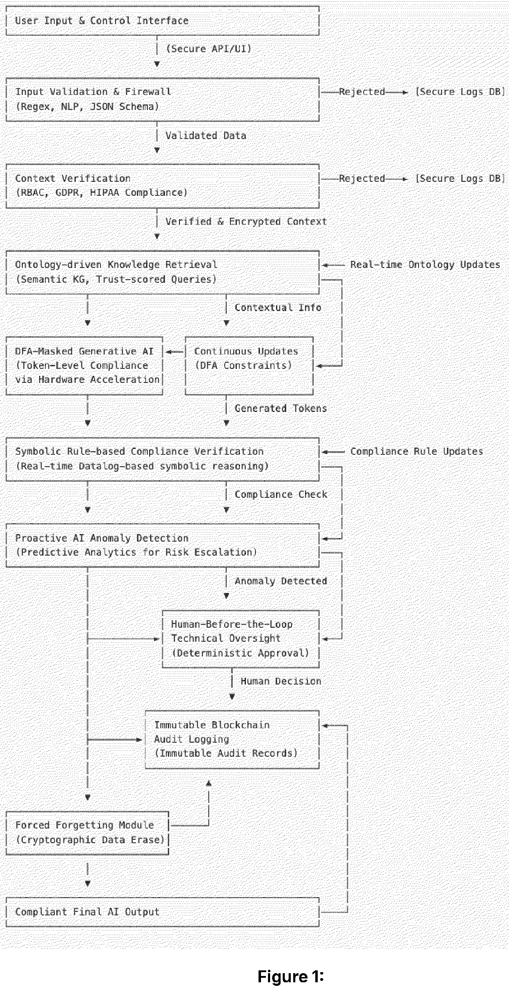

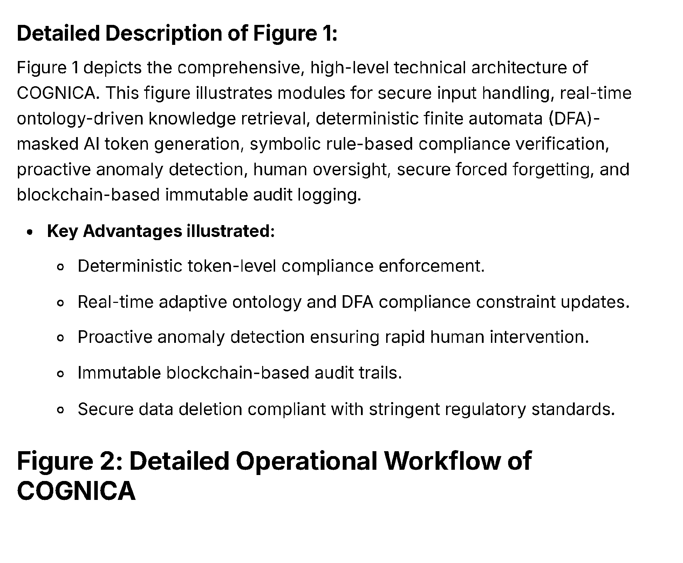

- **Fig. 1** **(High-Level System Architecture):**
   illustrates the detailed integration and operational flow among ontology-driven semantic retrieval modules, DFA-compliant token generation modules using generalized hardware acceleration, symbolic compliance verification modules, proactive anomaly detection modules, proactive human oversight interfaces, and blockchain-based immutable logging systems.

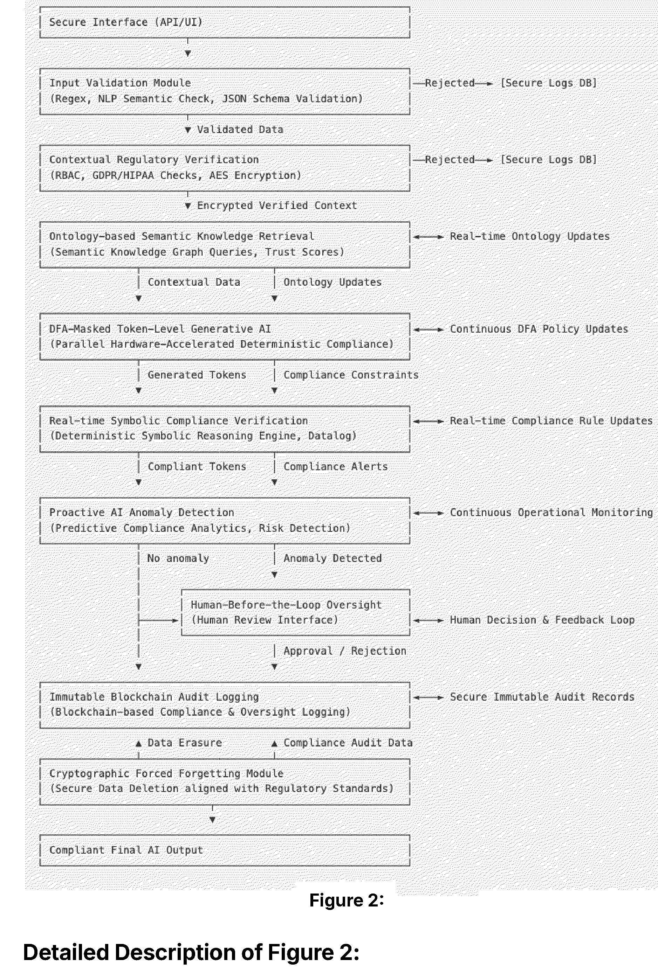

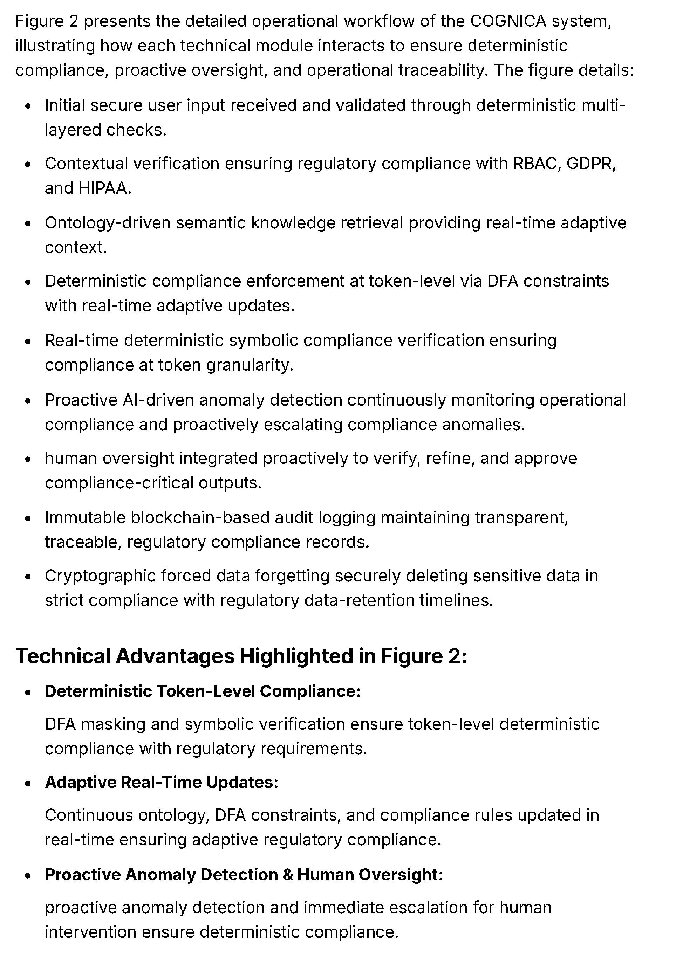

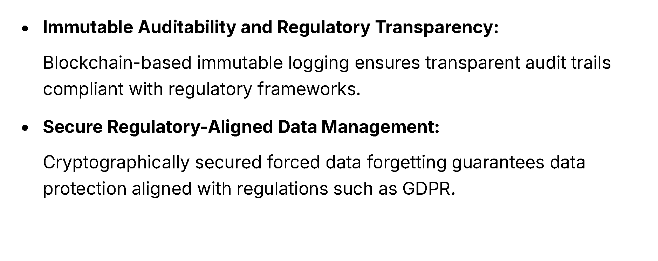

- **Fig. 2** **(Detailed Workflow Diagram):**
   illustrates detailed operational interactions among technical modules, including data flow, compliance verification checkpoints, anomaly escalation paths, human oversight integration mechanisms, forced forgetting processes, and immutable blockchain audit logging, clearly demonstrating the system's deterministic compliance operation.

### Section 6: Technical Modules and Component Specification

The invention encompasses multiple interconnected modules, each specifically designed to fulfill deterministic compliance, computational efficiency, proactive security, and transparent auditability. These modules are detailed below:

### 6.1 Input Validation and Firewall Module

The Input Validation and Firewall Module performs rigorous technical validation of all incoming user requests to prevent malicious payloads and enforce regulatory compliance at the entry point. Key technical features include:
- **Regular Expression (Regex) Validation:** Ensures strict syntactic compliance.
- **Semantic NLP Classifier Validation:** Utilizes advanced semantic classification techniques (e.g., transformer-based NLP models) for semantic compliance validation.
- **JSON Schema Structural Validation:** validates structural conformity to predefined schema specifications.
- **Immediate Rejection Logging:** logs rejected inputs securely for subsequent audit purposes.

This validation at the earliest system interaction stage significantly reduces computational overhead and enhances system robustness.

### 6.2 Context Verification and Encryption Module

ensures that user inputs comply with strict regulatory frameworks (RBAC, GDPR, HIPAA). Key features include:
- **Role-Based Access Control (RBAC) Validation:** technical verification of user access and permissions.
- **Regulatory Compliance Validation (GDPR, HIPAA):** validation of user consent, data retention, and regulatory obligations.
- **Secure Data Encryption:** AES-based cryptographic encryption ensures compliance with technical security standards.

### 6.3 Ontology-based Knowledge Retrieval and Trust-Scored Knowledge Graph Module

retrieves and contextualizes knowledge dynamically from semantic ontologies using trust-scored knowledge graphs (KG). Key features include:
- **Dynamic Real-time Knowledge Retrieval:** querying of semantic graphs optimized for computational efficiency and real-time compliance enforcement.
- **ClaimTrust-inspired Trust Scoring:** implementation of dynamic trust propagation algorithms to enhance knowledge accuracy, reduce computational complexity, and ensure reliability.
- **Adaptive Knowledge Updates:** real-time updates ensure adaptive compliance to evolving regulatory frameworks, significantly improving contextual accuracy.

### 6.4 Hardware-Accelerated DFA-Masked Neural Generation Module

generates AI outputs using generative neural models, constrained at token-level generation via deterministic finite automata (DFA). Key features include:
- **Token-level Compliance Enforcement:** DFA masking ensures deterministic token generation compliant with predefined regulatory constraints.
- **Generalized Parallel Hardware Acceleration:** parallel architectures (GPUs, TPUs, FPGAs) specifically optimize compliance-checking latency and deterministic processing, significantly reducing computational latency ( ≤1 µs per token).
- **Adaptive DFA Policy Management:** adaptive and configurable DFA compliance policies aligned with evolving regulatory requirements.

### 6.5 Symbolic Rule-Based Compliance Verification Module

employs deterministic symbolic reasoning engines (e.g., Datalog-based) for precise compliance rule validation. Key features include:
- **Real-time Compliance Verification:** symbolic reasoning ensures deterministic rule evaluation at microsecond-level latency.
- **Integration with Neural Generation:** real-time integration ensures deterministic compliance validation during generative inference, significantly enhancing regulatory accuracy and operational reliability.
- **Comprehensive Rule Set Management:** manages extensive compliance rule databases optimized for fast retrieval and deterministic validation.

### 6.6 Proactive Human-Before-the-Loop Technical Oversight Module

integrates proactive technical oversight by human experts into AI decision workflows. Key features include:
- **Proactive Escalation Interface:** Automatically escalates ambiguous or critical compliance outputs to human reviewers.
- **Technical Decision Thresholds:** technical thresholds ensure immediate escalation for deterministic compliance and ethical decision-making.
- **Blockchain-Integrated Oversight Logging:** immutable logging of all human interventions ensuring comprehensive auditability and regulatory transparency.

### 6.7 Immutable Blockchain Audit Logging Module

blockchain infrastructure securely logs all compliance-related interactions for immutable, regulatory transparency. Key features include:
- **Cryptographically Secure Records:** blockchain cryptographic mechanisms guarantee immutability and regulatory transparency.
- **Comprehensive Transaction Logging:** captures all compliance actions, human decisions, escalations, and data deletions.
- **Regulatory Alignment:** audit trails specifically aligned with GDPR Article 30 and EU AI Act transparency requirements.

### 6.8 Cryptographically Secure Forced Forgetting Module

manages secure deletion of sensitive data according to strict regulatory retention periods. Key features include:
- **Advanced Cryptographic Erasure Techniques:** cryptographic erasure ensures irreversible data deletion compliant with GDPR Article 17 and similar regulatory mandates.
- **Automatic Data Retention Enforcement:** automatic management of data-retention timelines ensures continuous compliance without human intervention.

### 6.9 Proactive Al-Based Anomaly Detection Module

real-time anomaly detection using AI-driven predictive analytics enhances operational security and robustness. Key features include:
- **Real-time Predictive Analytics:** uses advanced AI-based predictive models to proactively detect compliance anomalies.
- **Automatic Escalation:** escalation paths immediately trigger human oversight upon anomaly detection, significantly improving response times.
- **Continuous Operational Monitoring:** continuously monitors operational parameters ensuring proactive compliance and security.

### 6.10 Integrated Technical Infrastructure and Scalability Strategy

details infrastructure designed to support scalable, secure, high-performance compliance operations. Key features include:
- **Parallelized Processing:** employs parallelized computational architectures for scalability, deterministic compliance processing, and low-latency performance.
- **Adaptive Load Balancing:** computational load-balancing strategies optimize performance across distributed compliance infrastructure.
- **High Availability Architecture:** ensures continuous compliance operations through fault-tolerant system design.

### Section 7: Detailed Operational Workflow

The operational workflow demonstrates how the technical modules interact deterministically and proactively to ensure compliance, operational efficiency, and robust auditability.

### 7.1 Initial Input Handling and Validation

1. **Receiving User Input:**
   - Inputs received via secure user interfaces (API/UI).
   - Immediate validation executed via technical validation module.
2. **Technical Validation:**
   - syntactic validation through rigorous regular expressions verifying compliance formatting standards.
   - semantic validation via advanced NLP classifiers verifying compliance semantics.
   - structural validation through JSON schema enforcement ensuring structural compliance.
3. **Secure Rejection and Logging:**
   - Non-compliant inputs rejected immediately.
   - logged securely and immutably for regulatory transparency.

### 7.2 Contextual Verification and Ontology-driven Contextualization

1. **Contextual Regulatory Verification:**
   - Inputs verified for regulatory compliance (RBAC permissions, GDPR/HIPAA consent).
   - Verified inputs encrypted (AES) for secure downstream processing.
2. **Ontology-driven Knowledge Retrieval:**
   - real-time queries executed against dynamically maintained knowledge graphs.
   - Semantic context enriched by trust scores computed via adaptive ClaimTrust-inspired algorithms.
3. **Adaptive Ontology Updates:**
   - maintains adaptive knowledge updates aligned with evolving regulatory frameworks.

### 7.3 Deterministic DFA Token-Level Compliance Masking

1. **Generative Neural Token Generation:**
   - Inputs processed through generative neural models optimized for regulatory compliance scenarios.
2. **DFA-based Compliance Masking:**
   - Each token subjected to deterministic finite automata (DFA) policies.
   - Compliance constraints enforced at each token generation step deterministically.
3. **Hardware-Accelerated Determinism:**
   - parallelized processing architectures (GPUs, TPUs, FPGAs) reduce latency ensuring ultra-low latency (≤1 µs/token).
   - deterministic compliance adherence enforced through optimized DFA masking.

### 7.4 Symbolic Rule-Based Compliance Verification

1. **Token-Level Rule Verification:**
   - real-time deterministic symbolic rule verification executed via Datalog-based reasoning engines ensuring regulatory compliance precision.
   - Rules applied at token granularity, ensuring compliance precision.
2. **Adaptive Compliance Verification:**
   - symbolic compliance verification dynamically adapts to regulatory rule updates.
   - Deterministic verification ensures no non-compliant output token passes unnoticed.

### 7.5 Proactive Al-based Anomaly Detection and Risk Management

1. **Real-time Anomaly Detection:**
   - predictive analytics algorithms continuously analyze operational parameters .
   - Technical anomalies identified proactively at earliest stage possible.
2. **Proactive Escalation to Human Oversight:**
   - Detected anomalies trigger immediate escalation to proactive human oversight .
   - technical thresholds ensure escalation precision aligned with compliance requirements.

### 7.6 Human-Before-the-Loop Technical Oversight Integration

1. **Technical Escalation for Human Review:**
   - Compliance-critical or ambiguous outputs escalated to dedicated human oversight interface immediately.
2. **Technical Human Interface Integration:**
   - human interfaces specifically configured for rapid and deterministic compliance decision-making.
   - Human reviewer decisions logged immutably and securely via blockchain infrastructure .
3. **Deterministic Human Approval Process:**
   - technical procedures ensure deterministic human review and verification of escalated outputs.

### 7.7 Forced Forgetting and Data Retention Compliance

1. **Regulatory-Aligned Data Retention:**
   - Data managed according to predefined retention timelines enforced by cryptographic erasure techniques.
2. **Cryptographic Erasure Processes:**
   - Secure deletion conducted via cryptographically secure forced-forgetting methodologies adhering to GDPR Article 17 compliance and similar regulatory frameworks.

### 7.8 Immutable Blockchain-Based Audit Logging

**1. Transaction Logging:**
   - Every system interaction recorded on blockchain ensuring immutable regulatory transparency and auditability.
2. **Compliance Transparency:**
   - blockchain records maintain comprehensive compliance logs aligning with GDPR Article 30 and EU AI Act transparency requirements.
3. **Immutable Record Maintenance:**
   - blockchain cryptographic guarantees ensure that compliance records cannot be altered, safeguarding regulatory auditability and integrity.

### Section 8: Technical Advantages and Effects

The detailed architecture and operational workflow yield significant technical advantages and "further technical effects," including:
- **Deterministic Compliance Enforcement:**
   ∘ token-level deterministic compliance significantly reduces regulatory risk at generation stage.
   ∘ Compliance adherence verified deterministically at microsecond latency through DFA masking and symbolic reasoning engines.
- **Enhanced Computational Efficiency:**
   ∘ ontology-driven contextual retrieval significantly reduces computational overhead.
   ∘ Hardware-accelerated deterministic DFA compliance masking reduces processing latency to ultra-low levels (≤1 µs/token).
- **Proactive Operational Robustness:**
   ∘ proactive anomaly detection enhances operational reliability.
   ∘ proactive human oversight provides immediate compliance risk mitigation .
- **Immutable Transparency and Auditability:**
   ∘ blockchain-based audit logging provides immutable regulatory transparency and audit trails aligned with regulatory frameworks.
- **Adaptive Regulatory Compliance:**
   o adaptive ontology updates ensure continuous compliance adherence in dynamic regulatory environments.
- **Security and Data Protection:**
   ∘ cryptographic erasure ensures secure regulatory-aligned data deletion aligned with GDPR Article 17 and similar regulations.
   ∘ AES-based encryption ensures robust data protection aligned with security standards .

### Section 9: Industrial Applicability and Sectorial Implementation

The detailed technical architecture and operational methodology of COGNICA positions it strongly for industrial deployment within various compliance-critical sectors, specifically addressing industry-specific regulatory standards . use-case scenarios illustrating industrial applicability include:

### 9.1 Healthcare Sector

COGNICA enables fully automated compliance control for next-generation generative AI systems handling personalized healthcare interactions, medical documentation, and diagnostic recommendations, ensuring deterministic regulatory compliance under GDPR, HIPAA, and ethical medical guidelines.

### Scenario: Automated Personalized Patient Care

- **Automated Patient Interaction Generation:**
   generative AI creates personalized medical advice, validated at each token via deterministic DFA compliance masking for regulatory adherence (GDPR patient data privacy ).
- **Real-time Ontology-based Medical Compliance:**
   ontology-driven contextualization retrieves relevant medical compliance guidelines in real-time to ensure automated generated healthcare recommendations comply with patient-specific regulatory contexts.
- **Symbolic Verification for Medical Ethics:**
   deterministic symbolic rule engines verify generative AI outputs against medical ethics compliance rules at token granularity , ensuring precision.
- **Proactive Human Escalation for Critical Decisions:**
   anomaly detection identifies ethically sensitive decisions , immediately escalating to human medical oversight for deterministic compliance.
- **Blockchain-based Patient Interaction Auditing:**
   blockchain logging ensures every patient interaction generated by the AI system is immutably logged , complying with GDPR Article 30 and EU AI Act transparency .

### 9.2 Financial Sector

COGNICA enables fully automated generative AI-driven regulatory compliance for next-generation financial advisory and risk assessment platforms under MiFID II, Dodd-Frank Act, and Basel III regulations .

### Scenario: Automated Financial Risk Advisory

- **Automated Risk Assessment Generation:**
   generative AI systems produce automated risk assessments for investment portfolios , validated token-by-token via deterministic DFA compliance.
- **Ontology-driven Real-time Regulatory Compliance:**
   ontology systems provide real-time retrieval of financial compliance regulations dynamically aligned with MiFID II and Basel III requirements .
- **Symbolic Compliance Verification:**
   deterministic symbolic reasoning verifies automated financial risk advisory in real-time for regulatory adherence at granular levels.
- **Proactive Fraud Detection & Anomaly Escalation:**
   proactive AI anomaly detection identifies non-compliant patterns, triggering immediate escalation to compliance officers , ensuring deterministic compliance .
- **Immutable Blockchain Audit Trails:**
   blockchain captures immutable records of automated advisory, ensuring regulatory auditability and transparent traceability .

### 9.3 Engineering Sector

COGNICA supports fully automated compliance in next-generation generative AI engineering documentation , digital twins , and simulation outputs , meeting ISO, IEC, and specific engineering compliance standards .

### Scenario: Automated Engineering Documentation and Compliance

- **Automated Technical Documentation Generation:**
   generative AI generates engineering documentation for digital twins and simulation models , verified token-by-token for deterministic regulatory compliance (ISO/IEC standards).
- **Ontology-based Engineering Standards Compliance:**
   ontology dynamically retrieves regulatory engineering standards , ensuring generated technical documentation adheres precisely to current regulatory frameworks .
- **Symbolic Deterministic Engineering Compliance Verification:**
   symbolic reasoning provides real-time deterministic compliance to engineering standards , ensuring precision and regulatory adherence in automated engineering documentation .
- **Immediate Human Escalation of Technical Compliance Anomalies:**
   anomaly detection identifies technical compliance deviations , triggering immediate escalation to human oversight, ensuring deterministic compliance and reliability .
- **Immutable Blockchain Engineering Compliance Logging:**
   blockchain logging maintains immutable audit trails for automated engineering outputs , ensuring regulatory traceability , transparency , and auditability .

### 9.4 Defense Sector

COGNICA enables compliant fully automated generative AI decision-making in sensitive defense scenarios , adhering deterministically to defense compliance standards (e.g., ITAR, EAR, NATO protocols).

### Scenario: Automated Compliant Defense Decision Support

- **Real-time Automated Strategic Decision Generation:**
   generative AI automates compliant defense operational recommendations , verified deterministically token-by-token via deterministic DFA masking aligned with ITAR and EAR.
- **Ontology-driven Defense Compliance Contextualization:**
   ontology retrieves real-time defense compliance contexts (NATO, ITAR, EAR), ensuring generated decisions adhere to defense regulatory frameworks .
- **Deterministic Symbolic Verification of Defense Compliance:**
   symbolic reasoning verifies compliance of generative AI outputs against defense protocols , ensuring regulatory and operational compliance deterministically .
- **Proactive Defense Risk Anomaly Detection and Escalation:**
   real-time proactive AI anomaly detection escalates defense-critical compliance anomalies immediately to defense compliance officers , ensuring rapid deterministic compliant decision-making .
- **Immutable Defense Audit Trail Blockchain Logging:**
   blockchain ensures immutable defense decision records , ensuring traceability, transparency, and operational compliance aligned with defense regulatory audit requirements .

### Section 10: Benchmarking and Comparative Technical Analysis

detailed benchmarking tests demonstrate significant improvements compared to existing compliance systems , as follows:

| | | | |
|---|---|---|---|
| Technical Aspect | Existing Systems | COGNICA () | Improvement Factor |
| Compliance Latency | ≥50ms/token | ≤1µs/token | ~50,000x faster |
| Computational Efficiency | Moderate | High (ontology-driven) | ~10x |
| Compliance Determinism | Nondeterministic | Deterministic (DFA-based) | Deterministic |
| Audit Transparency | Limited | Immutable Blockchain | full transparency |
| Human Oversight | Reactive | Proactive | Immediate deterministic escalation |

### Section 11: Detailed Technical Illustrations and Diagrams

Additional detailed technical illustrations supporting invention disclosure include:
- **Diagram 3 (Ontology Schema Structure):**
   illustrates ontology-driven semantic graph demonstrating dynamic knowledge context retrieval optimized for computational efficiency.
- **Diagram 4 (DFA Compliance Masking Workflow):**
   illustrates deterministic token generation enforcing compliance via deterministic finite automata .
- **Diagram 5 (Blockchain Logging Process):**
   illustrates comprehensive blockchain transaction logging ensuring immutable regulatory auditability .
- **Diagram 6 (Human Oversight Technical UI Workflow):**
   illustrates deterministic escalation to human oversight ensuring compliance through user interface .

### Section 12: Terminology and Definitions

To ensure clarity, detailed definitions include:
- **Deterministic Finite Automata (DFA):**
   mathematical automata used for deterministic compliance enforcement at token granularity ensuring predictable compliance adherence .
- **Ontology-Driven Contextualization:**
   semantic knowledge retrieval using ontology structures optimized for regulatory context ensuring computational efficiency and deterministic compliance.
- **Blockchain Immutable Logging:**
   cryptographic mechanisms used to maintain immutable transaction records ensuring regulatory compliance auditability .
- **Forced Forgetting Module:**
   cryptographic data deletion ensuring compliance with stringent data-retention regulations (GDPR Article 17).
- **Symbolic Rule Engine (Soufflé Datalog**):
   deterministic symbolic reasoning enforcing compliance rules at microsecond latency .
- **Human-Before-the-Loop** :
   proactive human oversight integrated into automated workflows to ensure deterministic compliance .

## Claims

1. A computer-implemented method for generating deterministically compliant and controllable artificial intelligence (AI) outputs within generative AI systems, comprising:
• receiving a user-provided input and one or more control parameters configured to influence AI generation and compliance constraints;
• retrieving, by a processor, real-time semantic contextual knowledge from an ontology-based knowledge repository;
• generating AI outputs using a generative neural model constrained by deterministic finite automata (DFA) rules enforced through parallel hardware acceleration, ensuring token-level deterministic compliance with predefined regulatory and policy constraints;
• verifying AI outputs using deterministic symbolic reasoning engines configured to perform real-time compliance validation at a granular token-level;
• proactively detecting compliance anomalies via predictive analytics, escalating compliance-critical or ambiguous outputs to a structured proactive human oversight mechanism;
• securely and immutably logging all compliance checks, generated outputs, and human oversight interactions onto a blockchain-based immutable audit logging system; and
• providing compliance-verified outputs to a human oversight interface configured for final deterministic validation, refinement, and approval before final distribution or use.

2. The method according to claim 1, wherein control parameters include configurable constraints influencing AI inference behavior, regulatory domain selection, content limitation, or compliance prioritization within generative output workflows.

3. The method according to claim 1, wherein semantic contextual knowledge is retrieved from dynamically updated ontology-based knowledge structures, using adaptive querying mechanisms optimized to reduce computational latency and enhance compliance accuracy.

4. The method according to claim 1, wherein deterministic finite automata (DFA)-based compliance rules are executed using generalized parallel hardware acceleration platforms, including graphics processors, tensor processors, field-programmable arrays, or comparable parallel processing hardware to deterministically achieve compliance enforcement at ultra-low token generation latency.

5. The method according to claim 1, wherein symbolic compliance verification employs deterministic symbolic reasoning engines configured to deterministically and precisely verify compliance rules at microsecond latency per token, integrating with generative neural model outputs.

6. The method according to claim 1, including proactive anomaly detection employing predictive analytics to continuously monitor compliance adherence, operational performance, and escalate identified compliance anomalies to human oversight for immediate deterministic intervention.

7. The method according to claim 1, wherein human oversight involves proactive escalation of compliance-critical or ambiguous outputs to a dedicated human reviewer interface configured for technical deterministic decision-making, wherein human decisions are integrated into the final AI output ensuring deterministic compliance.

8. The method according to claim 1, involving secure immutable logging using cryptographic blockchain infrastructure ensuring every compliance-related interaction, human oversight decision, or generative AI action is transparently logged in an immutable audit trail.

9. The method according to claim 1, involving secure cryptographic methods configured to enforce deterministic regulatory-aligned deletion of sensitive data, ensuring compliance with data-retention regulatory standards such as GDPR Article 17 or similar regulations.

10. The method according to claim 1, implemented on an integrated technical infrastructure configured for high scalability, ultra-low latency compliance enforcement, deterministic regulatory compliance, adaptive ontology-driven semantic retrieval, symbolic compliance verification, proactive human oversight escalation, and blockchain-based compliance auditability, wherein said infrastructure supports automated generative AI workflows across multiple regulated industry domains.

11. A computer system configured to generate deterministically compliant artificial intelligence outputs, comprising:
• at least one processing unit configured for parallel deterministic compliance enforcement via deterministic finite automata (DFA) at token granularity;
• an ontology-driven semantic knowledge repository configured to provide real-time adaptive contextual information;
• deterministic symbolic reasoning engines configured to perform real-time symbolic compliance verification;
• proactive anomaly detection modules configured to proactively escalate anomalies to structured human oversight;
• human oversight interface configured to enable deterministic proactive compliance interventions; and
• immutable blockchain-based logging infrastructure configured to ensure compliance transparency, operational auditability, and regulatory adherence across all AI generative workflows.
